Europäisches Patentamt

European Patent Office

Office européen des brevets

(19)

(11) Numéro de publication: **0 061 404**
**A1**

(12)

# DEMANDE DE BREVET EUROPEEN

(21) Numéro de dépôt: 82400511.0

(22) Date de dépôt: 22.03.82

(51) Int. Cl.³: **G 01 L 1/22**

(30) Priorité: 20.03.81 FR 8105590

(43) Date de publication de la demande:
29.09.82 Bulletin 82/39

(84) Etats contractants désignés:
DE FR GB IT

(71) Demandeur: Dal Dan, Félice
22 Avenue de la Belle Grabrielle
F-94130 Nogent-sur-Marne(FR)

(72) Inventeur: Dal Dan, Félice
22 Avenue de la Belle Grabrielle
F-94130 Nogent-sur-Marne(FR)

(74) Mandataire: Gayraud, René
6, rue du Val
F-78200 Mantes-la-Ville(FR)

(54) Procédé de réalisation de capteurs à jauge de contrainte.

(57) Procédé de réalisation de capteurs à jauge de contrainte par sérigraphie de la partie résistive sur le support isolant.
Obtention de capteurs à jauge de containte pour la pesée, l'industrie aéronautique notamment.

EP 0 061 404 A1

La mesure d'une contrainte est actuellement réalisée au moyen de jauges. Ces jauges sont constituées d'une trame ou de plusieurs trames résistives constituées de métaux laminés ou gravés, collés sur des supports isolants et souples. Les jauges sont ensuite elles-mêmes collées aux endroits où l'on veut mesurer une contrainte.

Le collage de la trame résistive sur un support isolant souple est une opération délicate nécessitant beaucoup de soins, ce qui en augmente le prix de revient.

La présente invention remédie à ces inconvénients en permettant la réalisation de capteurs à jauges de contrainte d'un prix très bas.

La présente invention a pour objet la réalisation de capteurs à jauge de contrainte caractérisée en ce que la partie résistive de la jauge est obtenue au moyen d'une encre résistive stable (Cermet) sérigraphiée directement sur le support qui est, soit isolant (céramique, verre), soit rendu isolant au moyen d'une couche protectrice (émaillage - dépôt de silice).

Le support peut être constitué par une tôle en aluminium anodisé ou formé d'un sandwich comportant un matériau central conducteur recouvert sur chaque face d'une feuille ou couche isolante plus ou moins épaisse. Dans cette réalisation, la jauge de contrainte peut être sérigraphiée directement sur l'ensemble formant le sandwich ou sur la couche isolante simultanément lors de son dépôt sur le matériau central.

Le capteur à jauge selon l'invention peut avoir une forme et des valeurs de résistance adaptées à chaque mesure à effectuer la sérigraphie permettant une grande souplesse de réalisation. Bien entendu, la partie résistive de la jauge peut être sérigraphiée sur une seule ou sur les deux faces du support isolant.

**0061404**

REVENDICATIONS

1. Procédé de réalisation de capteurs à jauge de contrainte, caractérisé en ce que la partie résistive de ladite jauge est obtenue par sérigraphie directe sur le support isolant.

2. Procédé de réalisation de capteurs à jauge de contrainte selon 1, caractérisé en ce que l'on sérigraphie simultanément ladite jauge sur les deux faces du support.

3. Procédé de réalisation de capteurs à jauge de contrainte selon 1, caractérisé en ce que l'on sérigraphie simultanément ladite jauge avec le dépôt du support isolant.

# 0061404

Office européen des brevets

## RAPPORT DE RECHERCHE EUROPEENNE

Numéro de la demande

EP 82 40 0511

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR - A - 2 440 547 (F. DAL DAN) <br><br> * revendication 1 * <br><br> -- | 1,2 | G 01 L 1/22 |
| X,Y | FR - A - 2 438 829 (FABBRICA ITALIANA MAGNETI MARELLI S.P.A.) <br><br> * page 3, lignes 16 à 28; page 5, lignes 15 à 22; revendications 1,2 et 8; figure 1 * <br><br> -- | 1,2 | |
| X,Y | INSTRUMENTS AND EXPERIMENTAL TECHNIQUES, volume 19, no. 2, mars/avril 1976 <br> NEW YORK (US) <br> YU.A. GUSEV et al. "Film strain resistor for temperatures up to 1000°C, pages 564 à 566 <br><br> * page 564, alinéa 5 * | 1,2 | |

DOMAINES TECHNIQUES RECHERCHES (Int. Cl. 3)

G 01 L 1

------------

Le présent rapport de recherche a été établi pour toutes les revendications

| Lieu de la recherche | Date d'achèvement de la recherche | Examinateur |
|---|---|---|
| La Haye | 16-06-1982 | VAN ASSCHE |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82